# DEMANDE DE BREVET EUROPEEN

(11) **EP 0 665 196 A1**
(43) Date de publication de la demande: **02.08.1995**
(21) Numéro de dépôt: 95400181.4
(22) Date de dépôt: 27.01.1995
(51) Int. Cl.: C04B 35/565

(54) **Procédé de fabrication de matériaux céramiques de carbure de silicium, essentiellement de forme alpha et matériaux céramiques obtenus notamment par ledit procédé**

(30) Priorité: 27.01.1994 FR 9400896
(71) Demandeur: CERAMIQUES & COMPOSITES S.A., F-65460 Bazet (FR)
(72) Inventeur: Bougoin, Michel, F-65800 Aureilhan (FR)
(74) Mandataire: Warcoin, Jacques

(57) **Abrégé**

La présente invention concerne un procédé de fabrication de matériaux céramiques de carbure de silicium "noir", essentiellement de forme α, polycristallin, de structure équiaxe, par frittage naturel comprenant :
a) la formation d'un mélange homogène :
   1 - d'une poudre réactive de carbure de silicium, essentiellement de forme α, dont la taille moyenne de particules est inférieure à 3 µm et comportant 400 à 2000 ppm d'aluminium, et,
   2 - d'un additif contenant du carbone en une quantité correspondant a une teneur en carbone libre de 0,1 à 3 % en poids par rapport au mélange,
   3 - éventuellement d'une faible quantité de bore,
b) la mise en forme dudit mélange,
c) le frittage dudit corps formé, en atmosphère inerte au carbure de silicium ou sous vide, à une température d'environ 2000 à 2300 °C, jusqu'à ce qu'un matériau céramique polycristallin soit obtenu,
d) la récupération dudit matériau.

L'invention concerne également les matériaux céramiques en carbure de silicium obtenus.

## Description

L'invention concerne un procédé de fabrication de matériaux céramiques de carbure de silicium, essentiellement de forme α, polycristallin, de structure équiaxe, par frittage naturel (à pression ambiante) et les matériaux céramiques obtenus notamment par ledit procédé.

Les matériaux frittés de carbure de silicium de haute densité sont bien connus pour leur excellent comportement à haute température. Ils sont notamment caractérisés par des résistances élevées aux variations de température et à l'oxydation alliées à une faible dilatation, par une conductivité thermique et des modules élastiques élevés, une excellente résistance à la corrosion par les acides et les bases, une bonne résistance à l'usure et à l'abrasion, un faible coefficient de frottement des couples SiC/SiC ou SiC/matériau carboné et un haut degré de dureté. Toutes ces propriétés en font des matériaux de choix pour toutes les applications dans les domaines techniques tels que ceux relatifs aux turbines à gaz à haute température, aux bagues de frottement pour les garnitures mécaniques et les butées, aux paliers, aux éléments d'échangeurs de chaleur, aux blindages balistiques.

La densité théorique du carbure de silicium est de 3,21 g/cm³. Pour la plupart des applications précitées où les propriétés mécaniques à haute température doivent être optimales et le matériau doit être étanche, la densité doit, de préférence, être supérieure à environ 3,05 g/cm³, soit une densité supérieure à 95 % de la densité théorique et de préférence supérieure à 3,10 g/cm³ soit supérieure à 96,6 % de la densité théorique.

Le carbure de silicium utilisé est obtenu par le procédé industriel de production Acheson et provient des couches internes du cylindre de SiC formé dans le four. Les couches internes contiennent le carbure de silicium pur (encore appelé ``vert'') dont la teneur en impuretés métalliques, notamment en aluminium est très faible. Par opposition au carbure de silicium ``vert'', le carbure de silicium ``noir'' est celui qui se trouve dans la couche externe du rouleau de SiC formé dans le four et il est notamment caractérisé par une forte teneur en aluminium (environ 0,04 % à 0,2 %, soit 400 à 2000 ppm), une teneur en fer inférieure à 300 ppm et une teneur en autres impuretés métalliques inférieure à 500 ppm.

Bien qu'il ait été décrit auparavant des matériaux frittés obtenus par frittage de carbure de silicium sous pression, notamment en présence de bore ou d'une source de carbone, comme cela est décrit par exemple par le brevet US 3 836 673, de nos jours la fabrication de tels matériaux est effectuée à pression ambiante.

Le brevet US 4 346 049 décrit un procédé de frittage naturel de carbure de silicium pour la fabrication de céramiques présentant au moins 75 % de la densité théorique et qui consiste à soumettre un mélange comprenant :
- environ 91 à 99,85 parties en poids de carbure de silicium, essentiellement de forme α, ``vert'' (contenant environ 0,02 % ou moins d'aluminium), dont la surface spécifique est comprise entre environ 1 et 100 m²/g, ce carbure de silicium étant préalablement traité à l'acide (fluorhydrique, nitrique) afin d'éliminer les matériaux étrangers qui pourraient interférer avec l'opération de frittage,
- environ 0,67 à 20 parties en poids d'une source de carbone ayant un taux de carbone d'au moins 33 % en poids,
- environ 0,15 à 5 parties en poids d'une source de bore contenant entre environ 0,15 et 3 parties en poids de bore,
- environ 5 à 15 parties en poids d'un liant temporaire tel qu'un alcool polyvinylique,

à une température de frittage comprise notamment entre 1900°C et 2.500°C environ, afin d'obtenir un corps de densité d'au moins environ 2,4 g/cm³.

Les matériaux céramiques ainsi obtenus présentent notamment un taux de bore en poids compris entre 0,15 et 3 % et une densité de carbure de silicium allant jusqu'à 3.09 g/cm³ soit 96 % de la densité théorique.

Il est bien connu que le bore contribue à densifier le corps fritté. Cependant, il affaiblit la résistance à l'oxydation au delà de 1350°C. Par ailleurs, l'ajout de bore constitue un surcoût important qui grève sensiblement le coût de revient du procédé de frittage et par là même, le prix de revient du matériau fritté ainsi obtenu.

Un autre procédé de frittage naturel d'un carbure de silicium pulvérulent, de préférence sous forme α, a été proposé dans le brevet US 4 230 497 (qui correspond au brevet européen EP-B-4 031). Ce procédé est caractérisé en ce qu'on moule par compression à froid du carbure de silicium pulvérulent essentiellement sous la forme α, d'une granulométrie d'au plus 3 µm, avec un additif contenant de l'aluminium en une quantité correspondant à une teneur en aluminium libre de 0,3 à 3 % en poids par rapport au poids du carbure de silicium mis en jeu, et en présence d'un additif contenant du carbone sous la forme de carbone amorphe ou d'une matière cokéfiable à des températures d'au plus environ 1000°C avec formation de carbone amorphe, en une quantité correspondant à une teneur en carbone libre de 0,2 à 3 % en poids par rapport au poids du carbure de silicium mis en jeu, puis en ce qu'on fritte les objets moulés à une température de 2000 à 2300°C.

Ce brevet mentionne que l'aluminium peut être ajouté sous forme de carbure de silicium dopé. Cependant, ce brevet indique également que des quantités d'aluminium inférieures à 0,3 % en poids ne sont pratiquement plus efficaces pour obtenir une densification suffisante du carbure de silicium. Il est également précisé que le carbure de silicium de départ est tiré des zones internes du rouleau de carbure de silicium formé par le procédé Acheson (c'est-à-dire qu'il s'agit du carbure de silicium ``vert'') et qu'il a été préalablement traité à l'acide.

L'objet moulé polycristallin obtenu présente une densité d'au moins 97 % par rapport à la densité théorique du carbure de silicium, une quantité de 0,2 à 2,0 % en poids d'aluminium (soit 2000 à 20 000 ppm) et une granulométrie d'au plus 10 µm.

Cependant, l'ajout d'un additif à base d'aluminium présente plusieurs inconvénients. La forte réactivité de l'aluminium avec l'eau oblige pratiquement à passer par un procédé de mise en oeuvre en milieu solvant organique d'où un surcoût et des risques de toxicité, de pollution ou d'explosion, ceci étant valable pour l'aluminium métallique comme pour les composés de l'aluminium tels que le nitrure ou le carbure d'aluminium.

Ultérieurement, plusieurs tentatives ont été faites pour diminuer la quantité de bore tout en conservant les mêmes caractéristiques des matériaux frittés.

Ainsi, le document JP-A-60-186-467 propose d'utiliser une poudre de carbure de bore ayant une grande surface spécifique afin de réduire la quantité de bore. Le document JP-A-60-246263 décrit l'utilisation d'un bore polyphénylique.

Toutefois, les caractéristiques mécaniques des carbures de silicium frittés obtenus par ces méthodes sont encore insuffisantes.

Par ailleurs, le brevet US 4 853 299 décrit un procédé de frittage naturel de carbure de silicium permettant de réduire la présence de bore dans l'objet polycristallin comprenant le moulage d'un mélange de carbure de silicium, de 0,05 à 1 % en poids de bore par rapport au poids du carbure de silicium et d'un additif contenant du carbone, de façon que la quantité de carbone soit 1 à 3 fois celle de l'oxygène contenue dans le carbure de silicium, puis le chauffage du mélange à la température de frittage et le maintien du corps moulé à une température inférieure à la température de frittage jusqu'à ce qu'un film d'oxyde recouvrant la poudre de carbure de silicium soit éliminé par le carbone (par réduction de l'oxyde) suivi de l'opération de frittage qui permet à l'oxygène de se libérer.

Les matériaux céramiques obtenus présentent selon les exemples un taux de bore de 0,04 à 0,14 %. Néanmoins, ce procédé ne permet pas un frittage tout à fait satisfaisant. Par ailleurs, le procédé requiert l'utilisation de carboranes, comme source de bore et exclut l'utilisation de carbure de bore (B4C) ou de bore métallique. Toutefois, les carboranes ne sont pas produits industriellement (comme le bore ou le carbure de bore) et comme ils ne sont pas miscibles, voire même incompatibles à l'eau, cela oblige à passer par une voie solvant.

Comme additif contenant du carbone, l'addition de carbone amorphe présente aussi un effet défavorable par rapport à l'emploi d'une résine phénolique.

L'invention propose de résoudre les inconvénients précédemment évoqués et a notamment pour objet un procédé de fabrication de matériaux céramiques permettant de réduire considérablement la présence de bore dans les céramiques obtenues.

Un autre objet de la présente invention est de proposer un procédé de fabrication de matériaux céramiques, permettant d'utiliser une matière première économique voire même de supprimer certains traitements chimiques pouvant être onéreux et polluants.

Un autre objet de la présente invention est de proposer un procédé permettant notamment d'utiliser le bore métallique ou le carbure de bore.

Un autre objet de la présente invention est de proposer un procédé de fabrication de matériaux céramiques présentant une densification plus élevée pour de très faibles taux de bore.

Un autre objet de la présente invention est de proposer de nouveaux matériaux céramiques présentant une microstructure plus homogène (de structure équiaxe) et plus fine.

Par le terme ``équiaxe'', on se réfère à une microstructure dans laquelle la dimension maximum et la dimension minimum des grains sont dans un rapport inférieur à 4:1.

La Demanderesse a trouvé qu'un ou plusieurs objets précités pouvaient être atteints en utilisant du carbure de silicium ``noir'' obtenu notamment par le procédé Acheson.

Le procédé de fabrication de matériaux céramiques de carbure de silicium essentiellement sous la forme α polycristallin selon l'invention comprend :
a) la formation d'un mélange homogène :
   1 - d'une poudre réactive de carbure de silicium noir, essentiellement de forme α, dont la taille moyenne des particules est inférieure à 3 µm et comportant 400 à 2000 ppm d'aluminium (en insertion dans le réseau cristallin du carbure de silicium), et,
   2 - d'un additif contenant du carbone en une quantité correspondant à une teneur en carbone libre de 0,1 à 3 % en poids par rapport au mélange,
b) la mise en forme dudit mélange,
c) le frittage dudit corps formé, dans une atmosphère inerte au carbure de silicium ou sous vide, à une température d'environ 2000 à 2300 °C, jusqu'à ce qu'un matériau céramique mis en forme polycristallin soit obtenu,
d) la récupération dudit matériau.

Par le terme ``essentiellement'', on entend désigner que les matériaux contiennent au moins 60 % de forme α, de préférence au moins 90%.

Pour la mise en oeuvre du procédé selon l'invention, on utilise comme carbure de silicium de départ, une poudre de carbure de silicium dit ``noir'' obtenue par séparation dans le procédé de production industrielle (procédé Acheson) entre le carbure de silicium purifié (SiC ``vert'') et le carbure de silicium de surface qui comprend notamment certaines impuretés métalliques dont l'aluminium et qui est dénommé ``noir''.

L'aluminium est essentiellement substitué au silicium dans le réseau cristallin du carbure de silicium.

Le procédé Acheson consiste à réaliser la réaction ``SiO2 + C → SiC + 2 CO'', à partir d'un sable de silice de grande pureté et d'un coke de pétrole de faible teneur en soufre. La réaction endothermique est amorcée et entretenue par le passage d'un courant de forte intensité dans une résistance en graphite implantée au coeur de la masse réactive, cette dernière étant de plusieurs tonnes. La réaction a lieu vers 2400°C et sa durée est typiquement de 36 heures. Du fait de cette température élevée, on obtient essentiellement la phase alpha.

Après réaction, la couleur de SiC obtenu évolue du vert au noir et sa pureté diminue lorsque l'on s'éloigne du coeur vers le bord de la masse. Il est donc possible, si l'on recherche un SiC de grande pureté, de trier différentes qualités :
- le SiC vert à coeur, puis
- un Sic noir, puis
- un mélange de SiC noir et de matière n'ayant pas totalement réagi. Ce dernier s'est enrichi en impuretés et notamment en aluminium, par diffusion lors de la réaction. Il est généralement recyclé dans une synthèse Acheson et à ce moment là, on obtient du SiC noir en totalité.

Ce Sic noir récupéré passe de manière connue par plusieurs étapes successives de concassage, sélection granulométrique, broyage à sec, broyage en suspension, séchage. Il est éventuellement procédé à des attaques chimiques afin d'atténuer les teneurs en fer (attaque par HCI ; la pollution par le fer peut venir du broyage ou du coke de départ), en silice (attaque par une solution d'HF, KOH ou NaOH) ou en silicium libre (attaque par une solution de KOH ou NaOH). Le carbone libre peut être en partie éliminé par une oxydation ménagée.

La taille requise des grains est obtenue par broyage puis classement pour atteindre la granulométrie appropriée.

La granulométrie caractérise la répartition de la taille des particules élémentaires constituant la poudre, elle est obtenue à l'aide de granulomètres basés soit sur la diffraction d'un rayon laser par les particules (granulomètres à laser) soit sur une mesure de la vitesse de sédimentation des particules dans une suspension. La surface spécifique caractérise la réactivité de la poudre et elle est mesurée par la méthode B.E.T.

Les poudres de SiC d'une surface spécifique de 5 à 50 m²/g, de préférence de 10 à 20 m²/g sont particulièrement appropriées pour la mise en oeuvre du présent procédé. Ces poudres sont submicromiques ayant de préférence une granulométrie moyenne comprise entre 0,5 et 1 µm.

Le carbure de silicium-α tel qu'il peut être utilisé dans le cadre de la présente invention, présente un taux d'aluminium compris entre 400 et 2000 ppm. Il présente également de façon générale les caractéristiques suivantes :
- granulométrie moyenne ≦ 3,0µm et de préférence ≦ 1,0 µm,
- surface spécifique 5 à 50 et de préférence 10 à 20 m²/g,
- Si libre < 500ppm
- C libre < 1 %
- O< 1 %
- Fe < 300ppm
- autres impuretés métalliques < 500 ppm, de préférence entre 200 et 500 ppm.

L'additif contenant du carbone comprenant 0,1 à 3 % de carbone libre en poids par rapport au mélange peut se présenter sous la forme de carbone amorphe ou d'une matière organique pouvant être cokéfiée avec formation de carbone amorphe. Parmi les précurseurs organiques du carbone, on peut citer les polymères carbonés comme les résines phénoliques, les goudrons de pétrole ou de charbon ou les huiles de pétrole, le polystyrène.

De façon connue parmi ces composés, on utilisera avantageusement les produits de condensation phénolformaldéhyde du type des novolaques ou des résols qui se décomposent dans un intervalle de températures allant de 100 à 900°C en formant du carbone amorphe avec un rendement d'environ 35 à 60%.

Il est également avantageux d'ajouter du carbone amorphe. On utilisera de préférence un noir de carbone dont la surface spécifique est comprise entre 100 et 500 m²/g et le taux de cendres est inférieur à 0,1 %. Ceci est inattendu du fait que le brevet US 4 583 299 indique que l'utilisation d'un tel additif conduit à des résultats peu satisfaisants (exemple 15) lorsque l'ajout de bore est inférieur à 0,15 %.

Le moulage et la mise en forme dudit mélange sont effectués de manière connue par compression à froid, en donnant la forme appropriée au carbure de silicium pulvérulent essentiellement sous la forme α.

Il est avantageux de manière connue, afin de faciliter le moulage, d'utiliser en même temps que l'additif contenant du carbone, un liant temporaire. Parmi ces liants temporaires, on citera l'alcool polyvinylique, ou les acrylates ou le camphre. Ce liant est généralement présent en une quantité en poids n'excédant pas 1 % par rapport au poids du carbure de silicium mis en jeu. Il est également avantageux d'utiliser un lubrifiant et un plastifiant. Comme lubrifiant, on utilisera avantageusement l'acide stéarique et comme plastifiant le polyéthylène glycol.

L'étape de frittage est effectuée de manière connue dans un four à induction ou un four à résistance constitué d'un tube de graphite. Suivant la taille et la forme des objets à fritter, des temps de palier d'environ 0,5 à 6 heures, à la température de frittage précédemment indiquée, sont suffisants la plupart du temps pour obtenir la densité souhaitée.

L'étape de frittage est mise en oeuvre sous vide ou sous atmosphère inerte, c'est-à-dire en présence d'un gaz inerte, vis-à-vis du carbure de silicium. Il est préférable de procéder sous atmosphère inerte lorsque la température excède 1900°C, afin d'éviter tout risque de décomposition partielle de SiC.

L'expression ``frittage naturel'' signifie que la réaction de frittage est effectuée à pression atmosphérique ou même éventuellement sous pression réduite.

Les matériaux céramiques obtenus selon ce procédé peuvent atteindre une masse volumique de 3,14 g/cm³ soit 98 % de la densité théorique du SiC.

De préférence, l'aluminium est présent dans le carbure de silicium à raison de 450 à 2000 ppm.

Afin de sélectionner le carbure de silicium ``noir'' correspondant à cette caractéristique, il est possible de procéder de la façon suivante :

L'aluminium contenu dans la poudre de SiC est dosé par SAA (spectrométrie d'absorption atomique) ou par ICP ; la fluorescence X peut également être utilisée à cet effet.

Selon une variante préférée, on a trouvé que l'ajout dans le procédé selon l'invention, comme additif, d'une très faible quantité de bore améliorait considérablement le frittage sans affecter les propriétés mécaniques du produit fini.

Avantageusement, on ajoutera au mélange un additif contenant du bore de telle manière que la quantité de bore en poids par rapport au mélange soit comprise entre 0,01 et 0,14 % de préférence moins de 0,1 % de bore. Parmi les composés du bore pouvant être utilisés dans le cadre de la présente invention, on peut mentionner le bore métallique, le carbure de bore (B₄C), le décaborane (B₁₀H₁₄), le carborane (B₁₀H₁₂C₂).

De façon inattendue et préférée, les composés du bore que l'on utilisera seront choisis parmi le bore ou le carbure de bore. Ceci permet de simplifier considérablement le procédé par rapport aux composés du type décaborane. Le bore utilisé est sous forme amorphe (métallique).

L'ensemble des additifs organiques constitués des précurseurs éventuels du bore et du carbone, du plastifiant, du lubrifiant et du liant n'excède pas 10 % par rapport au poids de SiC mis en jeu.

Les matériaux céramiques obtenus selon cette variante peuvent atteindre 3,18 g/cm³ soit 99 % de la densité du SiC.

L'invention a également pour objet les matériaux céramiques en carbure de silicium-α, obtenus notamment par le procédé décrit ci-dessus, ayant une densité d'au moins 95 % de la densité théorique du carbure de silicium, un taux dè bore inférieur à 0,12 % avantageusement compris entre 0,02 et 0,12 %, de préférence inférieur ou égal à 0,1 %, un taux d'aluminium compris entre 0,04 et 0,15 %, un taux de carbone non combiné compris entre 0,05 et 3,0 % et qui présentent au moins l'une des autres caractéristiques suivantes :
- grains fins équiaxes < 30 µm, de préférence entre 2 et 15 µm et de taille moyenne typique 5 µm,
- dureté Vickers Hv500 > 20 Gpa
- résistance à la rupture en flexion 3 points de 20 à 1400°C > 400 MPa
- module d'Young > 400 GPa
- ténacité > 3MN.m^{-3/2}.

De façon particulièrement inattendue, on a trouvé que les matériaux céramiques selon l'invention, dont le taux de bore est compris entre environ 0,06 et 0,1 % présentaient néanmoins une densité d'au moins 98,4 %.

L'invention est maintenant illustrée par les exemples suivants donnés à titre indicatif, ainsi que par des exemples comparatifs destinés à illustrer les avantages procurés par le procédé selon l'invention.

### Exemple 1

A l'aide d'un broyeur, on mélange intimement dans 70 parties (en poids) d'eau déminéralisée :

100 parties d'une poudre de carbure de silicium, essentiellement de forme α, provenant de la zone externe (SiC noir) du produit obtenu par le procédé Acheson. Cette poudre présente les caractéristiques suivantes :
- granulométrie moyenne 0,7 µm
- Surface spécifique 12.4 m²/g
- Al 500 ppm
- Fe 50 ppm
- C libre 5000 ppm
- SiO2 libre 5000 ppm
- Si libre 400 ppm
- somme des autres impuretés métalliques < 500 ppm

2 parts d'un noir de carbone de 400 m²/g
1,5 part d'un stéarate utilisé à titre de lubrifiant,
3 parts d'un polyéthylèneglycol à titre de plastifiant,
2 parts d'alcool polyvinylique à titre de liant.

Le mélange ainsi élaboré est séché et granulé par atomisation puis mis en forme par un pressage isostatique sous 190 MPa d'un cylindre de diamètre 20 mm. La masse volumique apparente de l'échantillon pressé est de 1,84 g/cm³.

L'échantillon est délianté par un traitement de pyrolyse à 600°C pendant une heure, sous 1 atmosphère d'azote et le corps formé est soumis à un traitement de frittage pendant 1 heure à 2050°C, sous 1 atmosphère d'argon, et sur un support en graphite.

La masse apparente de l'échantillon fritté est de 2,98 g/m⁻³ soit 92,8 % de la densité théorique de SiC. L'examen au microscope optique d'une surface polie et attaquée selon la méthode Murakami révèle des grains dont la taille n'excède pas 15 µm. Le module d'Young est de 340 GPa et la tenacité de 3,5 MPa.m^{1/2}.

### Exemple 2

Le même procédé que celui décrit à l'exemple 1 est reproduit, avec la différence que 800 ppm de carbure de bore, soit 625 ppm de bore, sont ajoutés au mélange de départ.

L'échantillon pressé a une masse volumique apparente de 1,85 g/cm³ et l'échantillon fritté une masse volumique apparente de 3,16 g/cm³, soit 98,4 % de la densité théorique.

L'examen au microscope optique d'une surface polie et attaquée selon la méthode Murakami révèle des grains dont la taille n'excède pas 15 µm.

### Exemple 3

Le même procédé que celui décrit à l'exemple 1 est reproduit, avec la différence que 1600 ppm de carbure de bore, soit 1250 ppm de bore, sont ajoutés au mélange de départ.

L'échantillon pressé a une masse volumique apparente de 1.85 g/cm³ et l'échantillon fritté une masse volumique apparente de 3,17 g/cm³, soit 98,7 % de la densité théorique.

L'examen au microscope optique d'une surface polie et attaquée selon la méthode Murakami révèle des grains dont la taille n'excède pas 15 µm.

### Essais comparatifs

### Exemple 4

A l'aide d'un broyeur à boulets, on mélange intimement dans 70 parts (en poids) d'eau déminéralisée :
- 100 parts d'une poudre de carbure de silicium essentiellement de forme alpha, provenant de la zone interne (SiC vert) du produit obtenu par le procédé Acheson. Cette poudre présente les caractéristiques suivantes :
- granulométrie moyenne 0,5 µm
- Surface spécifique 14,6 m²/g
- Al 100 ppm
- Fe 100 ppm
- C libre 8000 ppm
- SiO2 libre 8000 ppm
- Si libre 400 ppm
- somme des autres impuretés métalliques < 500 ppm
- 2 parts d'un noir de carbone de 400 m²/g
- 1,5 part d'un stéarate utilisé à titre de lubrifiant,
- 3 parts d'un polyéthylèneglycol à titre de plastifiant,
- 2 parts d'alcool polyvinylique à titre de liant.

Le mélange ainsi élaboré est séché et granulé par atomisation puis mis en forme par un pressage isostatique sous 190 MPa d'un cylindre de diamètre 20 mm. La masse volumique apparente de l'échantillon pressé est de 1,80 g/cm³.

L'échantillon est délianté par un traitement de pyrolyse à 600°C pendant une heure, sous 1 atmosphère d'azote et le corps formé est soumis à un traitement de frittage pendant 1 heure à 2050°C, sous 1 atmosphère d'argon, et sur un support en graphite.

La masse apparente de l'échantillon fritté est de 2,44 g/cm³ soit 76,0 % de la densité théorique de SiC.

L'examen au microscope optique d'une surface polie et attaquée selon la méthode Murakami révèle des grains dont la taille n'excède pas 30 µm.

### Exemple 5

Le même procédé que celui décrit à l'exemple 4 est reproduit, avec la différence que 800 ppm de carbure de bore, soit 625 ppm de bore, sont ajoutés au mélange de départ.

L'échantillon pressé a une masse volumique apparente de 1.81 g/cm³ et l'échantillon fritté une masse volumique apparente de 2,62 g/cm³, soit 81,6 % de la densité théorique.

L'examen au microscope optique d'une surface polie et attaquée selon la méthode Murakami révèle des grains dont la taille n'excède pas 30 µm.

### Exemple 6

Le même procédé que celui décrit à l'exemple 4 est reproduit, avec la différence que 1600 ppm de carbure de bore, soit 1250 ppm de bore, sont ajoutés au mélange de départ.

L'échantillon pressé a une masse volumique apparente de 1.80 g/cm³ et l'échantillon fritté une masse volumique apparente de 3,14 g/cm³, soit 97,8 % de la densité théorique.

L'examen au microscope optique d'une surface polie et attaquée selon la méthode Murakami révèle des grains dont la taille n'excède pas 30 µm.

Les 6 compositions des exemples 1 à 6 précités ainsi que les résultats obtenus sont présentés dans le tableau I ci-dessous.

| **N° exemple** | **ajout Bore ( ppm.)** | **masse vol. apparente éch. pressé (g/cm³)** | **masse vol. apparente éch. fritté (g/cm³)** | **masse vol. apparente éch. fritté (% de D théor.)** | **taille des grains (µm)** |
|---|---|---|---|---|---|
| **1** | **0** | **1.84** | **2.98** | **92.8** | **< 15** |
| **2** | **625** | **1.85** | **3.16** | **98.4** | **< 15** |
| **3** | **1250** | **1.85** | **3.17** | **98.7** | **< 15** |
| **4** | **0** | **1.80** | **2.44** | **76.0** | **< 30** |
| **5** | **625** | **1.81** | **2.62** | **81.6** | **< 30** |
| **6** | **1250** | **1.80** | **3.14** | **97.8** | **< 30** |

Les exemples suivants illustrent d'autres mises en oeuvre de la présente invention.

### Exemple 7

A l'aide d'un broyeur, on mélange intimement dans environ 80 parties (en poids) d'eau déminéralisée :

100 parties d'une poudre de carbure de silicium, essentiellement de forme α, provenant de la zone externe (SiC noir) du produit obtenu par le procédé Acheson. Cette poudre présente les caractéristiques suivantes :
- granulométrie moyenne 0,5 µm
- Surface spécifique 14,3 m²/g
- Al 500 ppm
- Fe 50 ppm
- C libre 5000 ppm
- SiO2 libre 1270ppm
- Si libre 400ppm
- somme des autres impuretés métalliques < 500 ppm

1,5 part d'un noir de carbone de 400 m²/g
900 ppm de bore soit 1152 ppm de carbure de bore
1,5 part d'un stéarate utilisé à titre de lubrifiant,
3 parts d'un polyéthylèneglycol à titre de plastifiant,
2 parts d'alcool polyvinylique à titre de liant.

Le mélange ainsi élaboré est séché et granulé par atomisation puis mis en forme par un pressage isostatique sous 190 MPa d'un cylindre de diamètre 20 mm. La masse volumique apparente de l'échantillon pressé est de 1,77 g/cm³.

L'échantillon est délianté par un traitement de pyrolyse à 600°C pendant une heure, sous 1 atmosphère d'azote et le corps formé est soumis à un traitement de frittage, sous 1 atmosphère d'argon, et sur un support en graphite, avec l'un des paliers suivants :
. 1 heure à 2040°C
. 1 heure à 2075°C
. 5 heures à 2095°C.

La masse apparente de l'échantillon fritté est respectivement de 3,03 g/m⁻³ soit 94,4 % de la densité théorique de SiC, 3,08 g/m⁻³ soit 96 % de la densité théorique de SiC pour le 2ème essai et 3,14 g/m⁻³ soit 0,98 de la densité théorique de SiC pour le 3ème essai.

L'examen au microscope optique d'une surface polie et attaquée selon la méthode Murakami révèle des grains dont la taille n'excède pas 15 µm pour les trois essais.

### Exemple 8

L'exemple 7 est reproduit avec la différence que 1800 ppm de carbure de bore soit 1400 ppm de bore sont ajoutés.

La masse volumique de l'échantillon pressé est de 1,78 g/m⁻³.

Selon les trois essais précédents, on a obtenu les résultats suivants :
à 2040°C 3,14 g/cm⁻³ soit 98 % de la densité théorique
à 2075°C 3,18 g/cm⁻³ soit 99 % de la densité théorique
à 2095°C 3,18 g/cm⁻³ soit 99% de la densité théorique.

### Exemple 9

L'exemple 8 est reproduit en utilisant un carbure de silicium présentant les caractéristiques suivantes :
- granulométrie moyenne 0,52 µm
- Surface spécifique 14,3 m²/g
- Al 2000 ppm
- Fe 200 ppm
- C libre 500 ppm
- Si libre 400 ppm
- somme des autres impuretés métalliques < 500 ppm

La masse volumique de l'échantillon pressé est de 1,78 g/cm³.

Selon les trois essais précédents, on a obtenu les résultats suivants :
à 2040°C 3,09 g/cm³ soit 96% de la densité théorique
à 2075°C 3,15 g/cm³ soit 98% de la densité théorique
à 2095°C 3,15 g/cm³ soit 98% de la densité théorique.

### Exemple 10 (comparatif)

L'exemple 7 est reproduit avec un carbure de silicium vert qui présente les caractéristiques suivantes :
- granulométrie moyenne 0,42 µm
- Surface spécifique 17,2 m²/g
- Al 100 ppm
- Fe 100 ppm
- C libre 8000 ppm
- SiO₂ libre 1250 ppm
- Si libre 400 ppm
- somme des autres impuretés métalliques < 500 ppm

La masse volumique de l'échantillon pressé est de 1,79 g/cm³.

Selon les trois essais précédents, on a obtenu les résultats suivants :
à 2040°C 3,00 g/cm³ soit 93 % de la densité théorique
à 2075°C 3,05 g/cm³ soit 95 % de la densité théorique
à 2095°C 3,12 g/cm³ soit 97% de la densité théorique.

### Exemple 11 (comparatif)

L'exemple 8 est reproduit avec le carbure de silicium de l'exemple 10.

La masse volumique de l'échantillon pressé est de 1,78 g/cm³.

Selon les trois essais précédents, on a obtenu les résultats suivants :
à 2040°C 3,13 g/cm³ soit 97,5% de la densité théorique
à 2075°C 3,17 g/cm³ soit 99 % de la densité théorique
à 2095°C 3,18 g/cm³ soit 99 % de la densité théorique.

### Exemple 12 (comparatif)

L'exemple 9 est reproduit avec le carbure de silicium de l'exemple 10.

La masse volumique de l'échantillon pressé est de 1,80 g/cm³.

Selon les trois essais précédents, on a obtenu les résultats suivants :
à 2040°C 3,02 g/cm³ soit 94 % de la densité théorique
à 2075°C 3,06 g/cm³ soit 95 % de la densité théorique
à 2095°C 3,09 g/cm³ soit 96 % de la densité théorique.

Afin d'illustrer d'autres modes de réalisation de la présente invention, on a réalisé des exemples faisant varier la quantité de carbone (exemple 13), la nature du bore (exemple 14), la nature de la source de carbone (exemples 15 et 16).

### Exemple 13

L'exemple 8 est reproduit avec la différence que la quantité de carbone ajouté est de 3 parties.

La masse volumique de l'échantillon pressé est de 1,77 g/cm³.

Selon les trois essais précédents, on a obtenu les résultats suivants :
à 2040°C 3,13 g/cm³ soit 97 % de la densité théorique
à 2075°C 3,16 g/cm³ soit 98 % de la densité théorique
à 2095°C 3,17 g/cm³ soit 99 % de la densité théorique.

### Exemple 14

L'exemple 8 est reproduit avec la différence que le bore 1400 ppm est sous forme métallique.

La masse volumique de l'échantillon pressé est de 1,76 g/cm³.

Selon les trois essais précédents, on a obtenu les résultats suivants :
à 2040°C 3,14 g/cm³ soit 98 % de la densité théorique
à 2075°C 3,18 g/cm³ soit 99 % de la densité théorique
à 2095°C 3,18 g/cm³ soit 99 % de la densité théorique.

### Exemple 15

L'exemple 7 est reproduit avec la différence que le noir de carbone est remplacé par du résol (le stéarate étant éliminé).

La masse volumique de l'échantillon pressé est de 1,80 g/cm³.

Selon les trois essais précédents, on a obtenu les résultats suivants :
à 2040°C 3,11 g/cm³ soit 97 % de la densité théorique
à 2075°C 3,14 g/cm³ soit 98 % de la densité théorique
à 2095°C 3,17 g/cm³ soit 99 % de la densité théorique.

### Exemple 16

L'exemple 8 est reproduit avec la différence que le noir de carbone est remplacé par du résol (le stéarate étant éliminé).

La masse volumique de l'échantillon pressé est de 1,80 g/cm³.

Selon les trois essais précédents, on a obtenu les résultats suivants :
à 2040°C 3,18 g/cm³ soit 99 % de la densité théorique
à 2075°C 3,19 g/cm³ soit 99 % de la densité théorique
à 2095°C 3,19 g/cm³ soit 99 % de la densité théorique.

Deux compositions voisines des exemples 8 et 11 (comparatif) ont été mises en oeuvre à l'échelle pilote.

A l'aide d'un broyeur à boulets, on mélange intimement dans 75 à 85 parties (en poids) d'eau déminéralisée :
. 100 parties de poudre SiC (selon les exemples 8 et 11)
. 0,14 parts de bore sous la forme B4C
. 1,5 parts de carbone sous la forme de noir de carbone
. 1,5 parts d'un stéarate utilisé à titre de lubrifiant
. 3 parts d'un polyéthylène glycol à titre de plastifiant
. 2 parts d'alcool polyvinylique à titre de liant.

Le mélange ainsi élaboré est séché et granulé par atomisation puis mis en forme par pressage uniaxial avec une pression de 200 Mpa environ ; on élabore ainsi des barreaux qui, après frittage auront pour dimensions : 25 x 5 x 3 mm³.

L'échantillon est délianté par un traitement de pyrolyse à 600 C pendant 1 heure, sous 1 atmosphère d'azote et le corps formé est soumis à un traitement de frittage, sous 1 atmosphère d'argon, sur un support en graphite, avec l'un des paliers suivants :
. 1 heure à 2130°C
. 1 heure à 2160°C

Les deux compositions mises en oeuvre sont présentées dans le tableau ci-dessous :

| Exemple n° | Ajout B (%) | Ajout C (%) | forme du bore | forme du carbone |
|---|---|---|---|---|
| 17 | 0,14 | 1,50 | B4C | noir de C |
| 18 | 0,14 | 1,50 | B4C | noir de C |

Le tableau ci-après présente la densité des barreaux pressés, leur masse volumique apparente après frittage ainsi que les contraintes moyennes de rupture en flexion 3 points ; ces dernières sont mesurées sur un montage dont l'entraxe est de 20 mm, avec une vitesse de traverse de 0,5 mm/min.

| Exemple n° | d'éch. pressé (g/cm³) | frittage 1h à 2130°C D (g/cm³) | D (g/cm³) | frittage 1 h à 2160°C cte de rupture en flex. 3 pts (MPa) | module de Weibull |
|---|---|---|---|---|---|
| 17 | 1,79 | 3,09 | 3,18 | 405 | 12 |
| 18 | 1,80 | 3,09 | 3,18 | 364 | 14 |

On observe que, toutes choses égales par ailleurs, le SiC noir permet d'obtenir une résistance mécanique plus élevée d'environ 30 Mpa par rapport au SiC vert.

Ces essais montrent la possibilité d'obtenir un SiC fritté dont la résistance moyenne à la rupture en flexion 3 points est supérieure à 400 Mpa. à partir d'une poudre de SiC noir et d'un ajout de bore inférieur à 0,14 %, voir même inférieur à 0,10 %.

De ces exemples il apparaît que contrairement au SiC ``vert'', le SiC ``noir'' offre une excellente aptitude au frittage avec un ajout de bore inférieur à 0,1 %. Par ailleurs, pour un même ajout de bore et un taux de densification équivalent, le SiC noir permet d'obtenir une structure plus fine.

## Revendications

1. Procédé de fabrication de matériaux céramiques de carbure de silicium, essentiellement de forme α, polycristallin, de structure équiaxe, par frittage naturel (à pression ambiante) caractérisé en ce qu'il comprend :
a) la formation d'un mélange homogène :
1 - d'une poudre réactive de carbure de silicium ``noir'', obtenu lors de la production du carbure de silicium, notamment par le procédé Acheson, essentiellement de forme α, dont la taille moyenne des particules est inférieure à 3 µm et comportant 400 à 2000 ppm d'aluminium, et,
2 - d'un additif contenant du carbone en une quantité correspondant à une teneur en carbone libre de 0,1 à 3 % en poids par rapport au mélange,
b) la mise en forme dudit mélange,
c) le frittage dudit corps formé, en atmosphère inerte au carbure de silicium ou sous vide, à une température d'environ 2000 à 2300 °C, jusqu'à ce qu'un matériau céramique polycristallin soit obtenu,
d) la récupération dudit matériau.

2. Procédé selon la revendication 1, caractérisé en ce que l'aluminium est présent dans la poudre de carbure de silicium à raison de 450 à 2000 ppm.

3. Procédé selon la revendication 1, caractérisé en ce que le mélange comprend :
3 - une faible quantité de bore ou de l'un de ses dérivés.

4. Procédé selon la revendication 3, caractérisé en ce que le mélange comprend entre 0,01 et 0,14 % en poids de bore ou de l'un de ses dérivés.

5. Procédé selon la revendication 4, caractérisé en ce que le mélange comprend moins de 0,1 % de bore.

6. Procédé selon l'une des revendications 3 à 5, caractérisé en ce que le bore ou l'un de ses dérivés est choisi parmi le bore métallique ou le carbure de bore.

7. Matériaux céramiques en carbure de silicium, essentiellement de forme α, susceptibles d'être obtenus par le procédé selon l'une des revendications 1 à 6, ayant une densité d'au moins 95 % de la densité théorique du carbure de silicium, un taux de bore inférieur à 0,12 %, de préférence compris entre 0,02 et 0,12 %, un taux d'aluminium compris entre 0,04 et 0,15 %.

8. Matériaux céramiques en carbure de silicium, essentiellement de forme α, selon la revendication 7, caractérisés en ce que le taux de bore est inférieur à 0,1 %.

9. Matériaux céramiques en carbure de silicium, essentiellement de forme α, selon la revendication 8, caractérisés en ce que la densité est d'au moins 98,4 % (3,16 g/cm³) pour un taux de bore compris entre environ 0,06 et 0,1 %.

10. Matériaux céramiques en carbure de silicium, essentiellement de forme α selon la revendication 8 ou 9, caractérisés en ce qu'ils présentent au moins l'une des autres caractéristiques suivantes :
- grains fins équiaxes < 30 µm, de préférence entre 2 et 15 µm et de taille moyenne typique 5 µm,
- dureté Vickers Hv500 > 20 Gpa
- résistance à la rupture en flexion 3 points de 20 à 1400 C > 400 MPa
- module d'Young > 400 GPa
- ténacité > 3MN.m^{-3/2}.
